# EUROPÄISCHE PATENTSCHRIFT

(11) **EP 2 274 354 B1**
(45) Veröffentlichungstag und Bekanntmachung des Hinweises auf die Patenterteilung: **30.11.2011**
(21) Anmeldenummer: 09700770.2
(22) Anmeldetag: 09.01.2009
(51) Int. Cl.: C08G 18/10, C08G 18/48, C08G 18/71, C09J 175/08, C08G 65/337

(54) **HÄRTBARE ZUSAMMENSETZUNGEN ENTHALTEND WEICHELASTISCHE SILYLIERTE POLYURETHANE**
HARDENABLE COMPOSITIONS CONTAINING SOFT-ELASTIC SILYLATED POLYURETHANES
COMPOSITIONS DURCISSABLES CONTENANT DES POLYURÉTHANNES SILYLÉS SOUPLES

(30) Priorität: 10.01.2008 DE 102008003743
(43) Veröffentlichungstag der Anmeldung: 19.01.2011
(73) Patentinhaber: Henkel AG & Co. KGaA, 40589 Düsseldorf (DE)
(72) Erfinder: WRUBBEL, Noelle, 40591 Düsseldorf (DE); BOUDET, Helene, 40227 Düsseldorf (DE); KRLEJOVA, Andrea, 40210 Düsseldorf (DE); BOLTE, Andreas, 40627 Düsseldorf (DE); ZANDER, Lars, 41569 Rommerskirchen (DE); KLEIN, Johann, 40593 Düsseldorf (DE); KUNZE, Christiane, 51061 Köln (DE)
(86) Internationale Anmeldenummer: PCT/EP2009/050234
(87) Internationale Veröffentlichungsnummer: WO 2009/087228

(56) Entgegenhaltungen:
- EP-A- 0 931 800
- EP-B- 0 070 475
- WO-A-2005/042610
- DE-B- 1 151 113

## Beschreibung

Die vorliegende Erfindung betrifft silanvernetzende, härtbare Zusammensetzungen, deren Herstellung und Verwendung in Kleb- und Dichtstoffen und Beschichtungsmitteln.

Polymersysteme, die über reaktive Alkoxysilylgruppen verfügen, sind bekannt. In Gegenwart von Luftfeuchtigkeit sind diese alkoxysilanterminierten Polymere bereits bei Raumtemperatur in der Lage, unter Abspaltung der Alkoxygruppen miteinander zu kondensieren. Je nach Gehalt an Alkoxysilylgruppen und deren Aufbau bilden sich dabei hauptsächlich langkettige Polymere (Thermoplaste), relativ weitmaschige dreidimensionale Netzwerke (Elastomere) oder hochvernetzte Systeme (Duroplaste).

Die Polymere weisen in der Regel ein organisches Grundgerüst auf, das an den Enden Alkoxysilylgruppen trägt. Bei dem organischen Grundgerüst kann es sich beispielsweise um Polyurethane, Polyester, Polyether etc. handeln.

Einkomponentige, feuchtigkeitshärtende Kleb- und Dichtstoffe spielen seit Jahren eine bedeutende Rolle bei zahlreichen technischen Anwendungen. Neben den Polyurethan-Kleb- und Dichtstoffen mit freien Isocyanatgruppen und den traditionellen Silikon-Kleb- und Dichtstoffen auf der Basis von Dimethylpolysiloxanen sind in letzter Zeit auch verstärkt die so genannten modifizierten Silan-Kleb- und Dichtstoffe eingesetzt worden. Bei der letztgenannten Gruppe ist der Hauptbestandteil des Polymerrückgrates ein Polyether und die reaktiven und vernetzungsfähigen Endgruppen sind Alkoxysilylgruppen. Gegenüber den Polyurethan-Kleb- und Dichtstoffen weisen die modifizierten Silan-Kleb- und Dichtstoffe den Vorteil der Freiheit von Isocyanatgruppen, insbesondere von monomeren Diisocyanaten auf, weiterhin zeichnen sie sich durch ein breites Haftspektrum auf einer Vielzahl von Substraten ohne Oberflächenvorbehandlung durch Primer aus.

US 4,222,925 A und US 3,979,344 A beschreiben bereits bei Raumtemperatur härtbare siloxanterminierte organische Dichtstoffzusammensetzungen auf der Basis von Umsetzungsprodukten von Isocyanat-terminierten Polyurethan-Prepolymeren mit 3-Aminopropyltrimethoxysilan beziehungsweise 2-Aminoethyl-, 3-Aminopropylmethoxysilan zu isocyanatfreien siloxanterminierten Prepolymeren. Kleb- und Dichtstoffe auf der Basis dieser Prepolymeren weisen jedoch unbefriedigende mechanische Eigenschaften, insbesondere in Bezug auf ihre Dehnung und Reißfestigkeit auf.

Für die Herstellung von silanterminierten Prepolymeren auf der Basis von Polyethern sind die nachfolgend aufgeführten Verfahren bereits beschrieben worden:
- Copolymerisation von ungesättigten Monomeren mit solchen die Alkoxysilylgruppen aufweisen, wie z.B. Vinyltrimethoxysilan.
- Aufpfropfung von ungesättigten Monomeren wie Vinyltrimethoxysilan auf Thermoplaste wie Polyethylen.
- Hydroxyfunktionelle Polyether werden mit ungesättigten Chlorverbindungen, z.B. Allylchlorid, in einer Ethersynthese in Polyether mit endständigen olefinischen Doppelbindungen umgesetzt, die ihrerseits mit Hydrosilanverbindungen, welche hydrolysierbare Gruppen wie z.B. HSi(OCH₃)₃ aufweisen, in einer Hydrosilylierungsreaktion unter dem katalytischen Einfluss von beispielsweise Übergangsmetallverbindungen der 8. Gruppe zu silanterminierten Polyethern umgesetzt werden.
- In einem anderen Verfahren werden die olefinisch ungesättigte Gruppen enthaltenden Polyether mit einem Mercaptosilan wie z.B. 3-Mercaptopropyltrialkoxysilan umgesetzt.
- Bei einem weiteren Verfahren werden zunächst Hydroxylgruppen-haltige Polyether mit Di- oder Polyisocyanaten umgesetzt, die dann ihrerseits mit aminofunktionellen Silanen oder mercaptofunktionellen Silanen zu silanterminierten Prepolymeren umgesetzt werden.
- Eine weitere Möglichkeit sieht die Umsetzung von hydroxyfunktionellen Polyethern mit isocyanatofunktionellen Silanen wie z.B. 3-Isocyanatopropyltrimethoxysilan vor.

Diese Herstellverfahren und die Verwendung der oben genannten silanterminierten Prepolymeren in Kleb-/Dichtstoffanwendungen sind beispielsweise in den folgenden Patentschriften genannt: US-A-3971751, EP-A-70475, DE-A-19849817, US-A-6124387, US-A-5990257, US-A-4960844, US-A-3979344, US-A-3971751, US-A-3632557, DE-A-4029504, EP-A-601021 oder EP-A-370464.

EP-A-0931800 beschreibt die Herstellung von silylierten Polyurethanen durch Umsetzung einer Polyolkomponente mit einer endständigen Ungesättigtheit von weniger als 0,02 meq/g mit einem Diisocyanat zu einem Hydroxyl-terminierten Prepolymer, das anschließend mit einem Isocyanatosilan der Formel OCN-R-Si-(X)ₘ(-OR¹)₃₋ₘ wobei m 0,1 oder 2 ist und jeder R¹-Rest eine Alkylgruppe mit 1 bis 4 C-Atomen und R eine difunktionelle organische Gruppe ist. Gemäß der Lehre dieser Schrift weisen derartige silylierte Polyurethane eine überlegene Kombination aus mechanischen Eigenschaften auf und härten in vernünftigen Zeiträumen zu einem wenig klebrigen Dichtstoff aus, ohne eine übermäßige Viskosität aufzuweisen.

WO-A-2003 066701 offenbart Alkoxysilan- und OH-Endgruppen aufweisende Polyurethanprepolymere auf Basis von hochmolekularen Polyurethanprepolymeren mit erniedrigter Funktionalität zur Verwendung als Bindemittel für niedermodulige Dichtstoffe und Klebstoffe. Dazu soll zunächst ein Polyurethanprepolymer aus einer Diisocyanatkomponente mit einem NCO-Gehalt von 20 bis 60% und einer Polyolkomponente, umfassend ein Polyoxyalkylendiol mit einem Molekulargewicht zwischen 3000 und 20000 als Hauptkomponente, umgesetzt werden, wobei die Umsetzung bei einem Umsatz von 50 bis 90% der OH-Gruppen gestoppt werden soll. Das Reaktionsprodukt soll anschließend mit einer Alkoxysilan- und Aminogruppen aufweisenden Verbindung weiter umgesetzt werden. Durch diese Maßnahmen sollen Prepolymere mit verhältnismäßig geringer mittlerer Molekülmasse und niedriger Viskosität erhalten werden, die die Erreichung eines hohen Eigenschaftsniveaus gewährleisten sollen.

Aus WO-A-2005 042605 sind feuchtigkeitshärtende Alkoxysilan-funktionelle Polyetherurethan-Zusammensetzungen bekannt, die 20 bis 90 Gew.% eines Polyetherurethans A mit zwei oder mehr reaktiven Silangruppen und 10 bis 80 Gew.% eines Polyetherurethans B mit einer reaktiven Silangruppe enthalten. Das Polyetherurethan A soll dabei Polyethersegmente mit einem zahlenmittleren Molekulargewicht (Mₙ) von mindestens 3000 und einer Ungesättigtheit von weniger als 0,04 mequ/g aufweisen, und die reaktiven Silangruppen sollen durch Reaktion einer isocyanatreaktiven Gruppe mit einer Verbindung der Formel OCN-Y-Si-(X)₃ eingefügt werden. Das Polyetherurethan B soll ein oder mehrere Polyethersegmente mit einem zahlenmittleren Molekulargewicht (Mₙ) von 1000 bis 15000 aufweisen und die reaktiven Silangruppen sollen durch Reaktion einer Isocyanatgruppe mit einer Verbindung der Formel HN(R₁)-Y-Si-(X)₃ eingefügt werden. R₁ ist dabei eine Alkyl-, Cycloalkyl- oder aromatische Gruppe mit 1 bis 12 C-Atomen, X eine Alkoxygruppe und Y ein lineares Radikal mit 2 bis 4 C-Atomen oder ein verzweigtes Radikal mit 5 bis 6 C-Atomen.

Zur Reduzierung der Funktionalität und damit der Vernetzungsdichte von feuchtigkeitshärtenden alkoxysilanterminierten Polyurethanen schlägt WO-A-92/05212 die Mitverwendung von monofunktionellen Isocyanaten im Gemisch mit Diisocyanaten bei der Synthese vor. Monoisocyanate haben bekanntlich einen sehr hohen Dampfdruck und sind wegen ihrer Toxizität aus arbeitshygienischer Sicht bedenkliche Einsatzstoffe.

EP-A-1396513 beschreibt eine bei Raumtemperatur härtende Zusammensetzung, welche ein Polyoxyalkylenpolymer (A) mit einem Molekulargewicht von 8000 bis 50000 (berechnet aus der Hydroxylzahl) enthält, das hydrolysierbare Siliziumgruppen der Formel -SIXₐR¹₃₋ₐ aufweist. Darin ist X eine Hydroxylgruppe oder eine hydrolysierbare Gruppe, a ist 1, 2, oder 3 und R¹ ist eine C₁₋₂₀ substituierte oder unsubstituierte einwertige organische Gruppe. Die Zusammensetzung soll dabei sowohl Polyoxyalkylenpolymere (A) enthalten, bei denen a 1 oder 2 ist, als auch solche, bei denen a 3 ist. Wenn mehr als ein R¹ vorhanden ist, kann die Mehrzahl von R¹ gleich oder unterschiedlich sein, und wenn mehr als ein X vorhanden ist, kann die Mehrzahl von X gleich oder unterschiedlich sein. Die bei Raumtemperatur härtende Zusammensetzung soll als Dichtungsmasse, Imprägnierungsmittel, Klebstoff oder Beschichtungsmittel verwendbar sein.

Es besteht weiterhin das Bedürfnis nach isocyanatfreien Zusammensetzungen zur Herstellung von 1K- oder 2K- Kleb- und Dichtstoffen, die eine akzeptable Härtungszeit und nach Aushärtung eine besonders gute Elastizität und Dehnbarkeit aufweisen. Ferner besteht der Wunsch nach einer effizienten Syntheseroute und nach Zusammensetzungen, die keine Restklebrigkeit aufweisen.

Aufgabe der vorliegenden Erfindung ist daher, isocyanatfreie vernetzbare Zusammensetzungen bereitzustellen, die eine hohe Elastizität und eine gute Festigkeit bei sehr niedrigem E-Modul aufweisen. Ferner ist eine anwenderfreundliche Härtungszeit erwünscht.

Die erfindungsgemäße Lösung der Aufgabe ist den Patentansprüchen zu entnehmen.

Sie besteht im Wesentlichen in der Bereitstellung eines Verfahrens zur Herstellung eines silylierten Polyurethans, umfassend:
(A) Umsetzen
   (i) mindestens einer Polyolverbindung A mit einem Molekulargewicht von 500-2 0000 Dalton, insbesondere 4 000-10 000 Dalton, und einer terminalen Ungesättigtheit von weniger als 0,02 meq/g
   (ii) mit einem Dihalogenid zu einer Polyolverbindung B mit einem Molekulargewicht von 4 000-40 000 Dalton, insbesondere 8 000-20 000 Dalton, und nachfolgende
(B) Umsetzung dieses Polyols B mit einem oder mehreren Isocyanatosilanen der Formel (I):

   OCN-R-Si-(R¹)ₘ(-OR²)₃₋ₘ (I)
worin m 0, 1 oder 2 ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist, um die Hydroxylgruppen des Polyols mit dem Isocyanatosilan zu verkappen.

In einer bevorzugten Ausführungsform des erfindungsgemäßen Verfahrens ist R eine difunktionelle geradkettige oder verzweigte, gesättigte oder ungesättigte Alkylengruppe mit einer Hauptkette von 1 bis 6 Kohlenstoffatomen, besonders bevorzugt mit 2 bis 6 Kohlenstoffatomen, insbesondere eine Methylen- und ganz besonders bevorzugt eine Ethylen- oder Propylengruppe.

Die Erfindung betrifft auch ein silyliertes Polyurethan, das durch ein Verfahren hergestellt wird, welches das Umsetzen mindestens einer Polyolverbindung A mit einem Molekulargewicht von 500-20 000 Dalton, insbesondere 4 000-10 000 Dalton, und einer terminalen Ungesättigtheit von weniger als 0,02 meq/g mit einem Dihalogenid zu einer Polyolverbindung B mit einem mittleren Molekulargewicht von 4 000-40 000 Dalton, insbesondere 8 000-20 000 Dalton, und nachfolgende Umsetzung dieses hochmolekularen Polyols B mit einem oder mehreren Isocyanatosilanen der Formel (I), wodurch ein silyliertes Polyurethan gebildet wird, das Alkoxysilylgruppen als reaktive Endgruppen aufweist, umfasst.
Silylierte Polyurethane" im Sinne dieser Erfindung sind auch solche Verbindungen, die pro Molekül mehr als eine, aber weniger als drei Urethangruppen aufweisen.

Gegebenenfalls kann die so entstandene Polyolverbindung B mit einem mittleren Molekulargewicht von 4 000-40 000 Dalton, insbesondere 8 000-20 000 Dalton, in einer Folgereaktion mit einem Diisocyanat bei einem stöchiometrischen Überschuss der Polyolverbindung gegenüber der Diisocyanatverbindung zu einem Polyurethan-Prepolymer umgesetzt werden, das Hydroxyl-terminiert ist. Dieses wird dann anschließend mit einem oder mehreren Isocyanatosilan(en) der Formel (I) zu einem silylierten Polyurethan mit sehr hohem Molekulargewicht weiter umgesetzt. Dies bedeutet, dass ein weiterer Gegenstand der vorliegenden Erfindung ein Verfahren zur Herstellung eines silylierten Polyurethans ist, welches das
(A) Umsetzen
   (i) mindestens einer Polyolverbindung A mit einem Molekulargewicht von 500-20 000 Dalton, insbesondere 4 000-10 000 Dalton, und einer terminalen Ungesättigtheit von weniger als 0,02 meq/g
   (ii) mit einem Dihalogenid zu einer Polyolverbindung B mit einem Molekulargewicht von 4 000-40 000 Dalton, insbesondere 8 000-20 000 Dalton, und nachfolgende
(B) Umsetzung dieses Polyols B mit einem Diisocyanat im stöchiometrischen Überschuss des Polyols zu einem Polyurethan-Prepolymer C und nachfolgende
(C) Umsetzung dieses Prepolymers C mit einem oder mehreren Isocyanatosilan(en) der Formel (I):

   OCN-R-Si-(R¹)ₘ(-OR²)₃₋ₘ (I)

   worin m 0, 1 oder 2 ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist, umfasst.

Die Erfindung betrifft somit auch ein silyliertes Polyurethan, das durch ein Verfahren hergestellt wird, welches das
(A) Umsetzen
   (i) mindestens einer Polyolverbindung A mit einem Molekulargewicht von 500-20 000 Dalton, insbesondere 4 000-10 000 Dalton, und einer terminalen Ungesättigtheit von weniger als 0,02 meq/g
   (ii)mit einem Dihalogenid zu einer Polyolverbindung B mit einem Molekulargewicht von 4 000-40 000 Dalton, insbesondere 8 000-20 000 Dalton, und nachfolgende
(B) Umsetzung dieses Polyols B mit einem Diisocyanat im stöchiometrischen Überschuss des Polyols zu einem Polyurethan-Prepolymer C und nachfolgende
(C) Umsetzung dieses Prepolymers C mit einem oder mehreren Isocyanatosilan(en) der Formel (I):

   OCN-R-Si-(R¹)ₘ(-OR²)₃₋ₘ (I)

   worin m 0, 1 oder 2 ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist, umfasst.

In einer weiteren bevorzugten Ausführungsform des erfindungsgemäßen Verfahrens und des erfindungsgemäßen silylierten Polyurethans ist m null oder eins.

Ein weiterer Gegenstand der vorliegenden Erfindung ist eine feuchtigkeitshärtende Zubereitung, die ein oder mehrere erfindungsgemäße(s) silylierte(s) Polyurethan(e) oder ein oder mehrere silylierte(s) Polyurethan(e), das/die nach einem erfindungsgemäßen Verfahren hergestellt wurde(n), enthält, und deren Verwendung als Klebstoff, Dichtstoff oder Beschichtungsmittel. Zusätzlich zu den erfindungsgemäßen silylierten Polyurethanen kann diese Zubereitung noch Weichmacher, Füllstoffe, Katalysatoren und weitere Hilfs- und Zusatzstoffe enthalten.

Als Polyolverbindungen werden Polyalkylenglycole, insbesondere Polyethylenoxide und/oder Polypropylenoxide eingesetzt.

Polyole, die Polyether als Polymergerüst enthalten, besitzen nicht nur an den Endgruppen, sondern auch im Polymerrückgrat eine flexible und elastische Struktur. Damit kann man Zusammensetzungen herstellen, die nochmals verbesserte elastische Eigenschaften aufweisen. Dabei sind Polyether nicht nur in ihrem Grundgerüst flexibel, sondern gleichzeitig beständig. So werden Polyether beispielsweise von Wasser und Bakterien, im Gegensatz zu beispielsweise Polyestern, nicht angegriffen oder zersetzt.

Besonders bevorzugt werden daher Polyethylenoxide und/oder Polypropylenoxide eingesetzt.

Das Molekulargewicht Mₙ des Polymergerüsts der Polyolverbindungen A der erfindungsgemäßen Zusammensetzung beträgt zwischen 500 und 20 000 g/mol (Dalton), wobei die terminale Ungesättigtheit kleiner als 0,02 meq/g ist.

Diese Molekulargewichte sind besonders vorteilhaft, da diese Polyole kommerziell leicht verfügbar sind. Besonders bevorzugt sind Molekulargewichte von 4 000 -10000 g/mol (Dalton).

Ganz besonders bevorzugt werden Polyoxyalkylene, insbesondere Polyethylenoxide oder Polypropylenoxide, eingesetzt, die eine Polydispersität PD von weniger als 2, bevorzugt weniger als 1,5 aufweisen.

Unter dem Molekulargewicht Mₙ wird das zahlenmittlere Molekulargewicht des Polymeren verstanden. Dieses kann, ebenso wie das gewichtsmittlere Molekulargewicht M_{w}, durch Gelpermeationschromatographie (GPC, auch: SEC) bestimmt werden. Dieses Verfahren ist dem Fachmann bekannt. Die Polydispersität leitet sich aus den mittleren Molekulargewichten M_{w} und Mₙ ab. Sie wird berechnet als PD = M_{w}/ Mₙ.

Besonders vorteilhafte viskoelastische Eigenschaften lassen sich erreichen, wenn man als polymere Grundgerüste Polyoxyalkylenpolymere A, welche eine enge Molmassenverteilung und damit niedrige Polydispersität besitzen, einsetzt. Diese sind beispielsweise durch die so genannte Double-Metal-Cyanide-Katalyse (DMC-Katalyse) herstellbar. Diese Polyoxyalkylenpolymere zeichnen sich durch eine besonders enge Molmassenverteilung, durch eine hohe mittlere Molmasse und durch eine sehr niedrige Zahl an Doppelbindungen an den Enden der Polymerketten aus. Solche Polyoxyalkylenpolymere haben eine Polydispersität PD (M_{w}/Mₙ) von höchstens 1,7.
Besonders bevorzugte organische Grundgerüste sind beispielsweise Polyether mit einer Polydispersität von etwa 1,01 bis etwa 1,3, insbesondere etwa 1,05 bis etwa 1,18, beispielsweise etwa 1,08 bis etwa 1,11 oder etwa 1,12 bis etwa 1,14.

Bei der Herstellung der erfindungsgemäßen silylierten Polyurethane wird zunächst in einem ersten Schritt in einer "Williamson-Ethersynthese" die vorgenannte Polyolverbindung A mit einem Molekulargewicht Mₙ zwischen 500 und 20 000 g/mol, insbesondere zwischen 4 000 und10 000 g/mol, mit Alkali- oder Erdalkaliverbindungen in das entsprechende Alkoholat umgewandelt, das anschließend mit einem Dihalogenid zu einer Polyolverbindung B mit einem mittleren Molekulargewicht Mₙ von 4 000-40 000 g/mol (Dalton), insbesondere 8 000-20 000 g/mol (Dalton), umgesetzt wird. Im nachfolgenden Schritt wird diese Polyolverbindung B mit einem oder mehreren Isocyanatosilanen der Formel (I) so umgesetzt, dass die Hydroxylgruppen vollständig durch das Isocyanatosilan verkappt werden.

Die zur Alkoholatbildung notwendigen Alkali- oder Erdalkaliverbindungen können aus den Metallen K, Na oder deren Hydriden wie NaH, Hydroxiden, oder niederen Alkoholaten wie NaOCH₃, KOCH₃ oder K-tert-butoxid oder auch den entsprechenden Erdalkalimetallen oder -verbindungen ausgewählt werden.

Als Dihalogenid können in einem erfindungsgemäßen Verfahren bzw. zur Herstellung eines erfindungsgemäßen Polyurethans eine Reihe von Organohalogenverbindungen mit zwei Halogenatomen pro Molekül eingesetzt werden. Konkrete Beispiele hierfür sind Bis(chlormethyl)-benzol, Bis(chlormethyl)-ether, Bis(brommethyl)-benzol, wobei 1,3-Bis(brommethyl)-benzol besonders bevorzugt verwendet wird. Hierdurch handelt es sich bei der so gebildeten Polyolverbindung B um eine Polyoxyalkylenarylenverbindung.
Für die nachfolgende Umsetzung des Polyols B mit einem oder mehreren Isocyanatosilanen sind beispielsweise die nachfolgend aufgeführten Isocyanatosilane geeignet:
Methyldimethoxysilylmethylisocyanat, Ethyldimethoxysilylmethylisocyanat, Methyldiethoxysilylmethylisocyanat, Ethyldiethoxysilylmethylisocyanat, Methyldimethoxysilylethylisocyanat, Ethyldimethoxysilylethylisocyanat, Methyldiethoxysilytethylisocyanat, Ethyldiethoxysilylethylisocyanat, Methyldimethoxysilylpropylisocyanat, Ethyldimethoxysilylpropylisocyanat, Methyldiethoxysilylpropylisocyanat, Ethyldiethoxysilylpropylisocyanat, Methyldimethoxysilylbutylisocyanat, Ethyldimethoxysilylbutylisocyanat, Methyldiethoxysilylbutylisocyanat, Diethylethoxysilylbutylisocyanat, Ethyldiethoxysilylbutylisocyanat, Methyldimethoxysilylpentylisocyanat, Ethyldimethoxysilylpentylisocyanat, Methyldiethoxysilylpentylisocyanat, Ethyldiethoxysilylpentylisocyanat, Methyldimethoxysilylhexylisocyanat, Ethyldimethoxysilylhexylisocyanat, Methyldiethoxysilylhexylisocyanat, Ethyldiethoxysilylhexylisocyanat, Trimethoxysilylmethylisocyanat, Triethoxysilylmethylisocyanat, Trimethoxysilylethylisocyanat, Triethoxysilylethylisocyanat, Trimethoxysilylpropylisocyanat (z.B. GF 40, Fa. Wacker), Triethoxysilylpropylisocyanat, Trimethoxysilylbutylisocyanat, Triethoxysilylbutylisocyanat, Trimethoxysilylpentylisocyanat, Triethoxysilylpentylisocyanat, Trimethoxysilylhexylisocyanat, Triethoxysilylhexylisocyanat. Bevorzugt werden Methyldimethoxysilylmethylisocyanat, Methyldiethoxysilylmethylisocyanat, Methyldimethoxysilylpropylisocyanat und Ethyldimethoxysilylpropylisocyanat oder deren Trialkoxyanaloga, besonders bevorzugt ist das Isocyanatosilan der Formel (I) 3-isocyanatopropyl-trimethoxysilan oder 3-Isocyanatopropyl-triethoxysilan.

Das oder die Isocyanatosilan(e) werden dabei in mindestens stöchiometrischer Menge zu den Hydroxylgruppen des Polyols eingesetzt, bevorzugt wird jedoch ein geringer stöchiometrischer Überschuss der Isocyanatosilane gegenüber den Hydroxylgruppen des Polyols. Dieser stöchiometrische Überschuss beträgt zwischen 0,5 und 10, vorzugsweise zwischen 1,2 und 2 Equivalente Isocyanatgruppen bezogen auf die Hydroxylgruppen.

Für die Umwandlung der Polyolverbindung B in ein alternativ einzusetzendes Hydroxyl-terminiertes Polyurethan-Prepolymer können die folgenden Diisocyanate verwendet werden:
Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3-oder-1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) sowie deren Isomerengemische. Weiterhin kommen partiell oder vollständig hydrierte Cycloalkylderivate des MDI, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bisisocyanatoethylester, 1-Chlormethylphenyl-2,4- oder -2,6-diisocyanat, 1-Brommethylphenyl-2,4- oder - 2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Diisocyanate der Dimerfettsäuren, oder Gemische aus zwei oder mehr der genannten Diisocyanate, in Frage.

In einer bevorzugten Ausführungsform des erfindungsgemäßen Verfahrens bzw. des erfindungsgemäßen Polyurethans ist die Diisocyanatverbindung aus der Gruppe bestehend aus 2,4-Toluol-diisocyanat, 2,6-Toluol-diisocyanat, 4,4'-Diphenyl-methandiisocyanat, 2,4'-Diphenyl-methandiisocyanat, 1-Isocyanato-3,3,5-trimethyl-5-isocyanatomethylcyclohexan (isophorondiisocyanat, IPDI), 4,4'-Dicyclohexylmethandiisocyanat-Isomeren, Tetramethylxylylendiisocyanat (TMXDI), und Mischungen davon ausgewählt.

Gegebenenfalls können bei der Herstellung des Hydroxyl-terminierten Polyurethan-Prepolymers noch monofunktionelle Verbindungen mit verwendet werden.
Erfindungsgemäß sind als monofunktionelle Verbindungen solche Verbindungen geeignet, die gegenüber Isocyanaten reaktive Gruppen mit einer Funktionalität von 1 haben. Grundsätzlich sind hierfür alle monofunktionellen Alkohole, Amine oder Mercaptane verwendbar, dies sind insbesondere monofunktionelle Alkohole mit bis zu 36 Kohlenstoffatomen, monofunktionelle primäre und/oder sekundäre Amine mit bis zu 36 Kohlenstoffatomen oder monofunktionelle Mercaptane mit bis zu 36 Kohlenstoffatomen. Es können aber auch Mischungen von Polyalkoholen, Polyaminen und/oder Polymercaptanen als monofunktionelle Verbindungen verwendet werden, solange deren durchschnittliche Funktionalität deutlich unter 2 liegt.

Im Rahmen einer weiteren bevorzugten Ausführungsform des erfindungsgemäßen Verfahrens bzw. des erfindungsgemäßen Polyurethans enthält die Polyolmischung zusätzlich mindestens eine gegenüber Isocyanaten monofunktionelle Verbindung ausgewählt aus Monoalkoholen, Monomercaptanen, Monoaminen oder deren Mischungen, und der Anteil der monofunktionellen Verbindung an der Mischung aus Polyol und der monofunktionellen Verbindung beträgt 1 bis 40 Mol%, vorzugsweise 1 bis 20 Mol%.

Besonders bevorzugt sind zum Beispiel Monoalkohole wie Benzylalkohol, Methanol, Ethanol, die Isomeren des Propanols, Butanols und Hexanols, Monoether von Ethylenglykol und/oder Diethylenglykol, sowie die durch Reduktion von Fettsäuren erhältlichen primären Alkohole mit 8 bis 18 C-Atomen wie Octanol, Decanol, Dodecanol, Tetradecanol, Hexadecanol und Octadecanol, insbesondere in Form technischer Gemische derselben. Monoalkohole mit 4 bis 18 C-Atomen sind bevorzugt, da sich die niedrigen Alkohole nur schwer wasserfrei herstellen lassen.

Weiterhin einsetzbar sind Monoalkylpolyetheralkohole unterschiedlichen Molekulargewichts, wobei ein Zahlenmittel des Molekulargewichts zwischen 1000 und 2000 bevorzugt ist. Ein bevorzugter Vertreter ist z. B. Monobutylpropylenglykol.

Es können auch gesättigte Fettalkohole mit bis zu 26 Kohlenstoffatomen eingesetzt werden, vorzugsweise solche mit bis zu 22 Kohlenstoffatomen, die großtechnisch durch Reduktion (Hydrierung) von Fettsäuremethylestem synthetisiert werden. Beispielhaft genannt seien: Capronalkohol, Caprylalkohol, Pelargonalkohol, Caprinalkohol, Laurinalkohol, Myristinalkohol, Cetylalkohol, Stearylalkohol, Gadoleylalkohol und Behenylalkohol oder die Guerbetalkohole 2-Hexyldecanol, 2-Octyldodecanol, 2-Decyltetradecanol, 2-Dodecylhexadecanol, 2-Tetradecyloctadecanol, 2-Hexadecyleicosanol, Guerbetalkohol aus Erucylalkohol, Behenylalkohol und Ocenolen.

Gegebenfalls können Gemische, resultierend aus der Guerbetisierung technischer Fettalkohole, zusammen mit den anderen vorgenannten Alkoholen, verwendet werden.

Der Anteil der monofunktionellen Verbindung(en) beträgt 0 bis 40 Molprozent, bezogen auf die Polyolmischung, besonders bevorzugt ist ein Anteil an monofunktioneller Verbindung(en) von 15 bis 30 Molprozent

Der stöchiometrische Überschuss der Summe aus Polyolverbindungen und monofunktioneller Verbindung gegenüber der eingesetzten Diisocyanatverbindung oder Mischung aus Diisocyanaten beträgt 1,1 bis 2,0, vorzugsweise liegt er zwischen 1,2 und 1,5. Hierdurch ist sichergestellt, dass als Umsetzungsprodukt des Polyols B ein Polyurethan-Prepolymer mit endständigen Hydroxylgruppen gebildet wird.

Die nachfolgende Umsetzung der Hydroxyl-terminierten Polyurethan-Prepolymer-Mischung mit dem Isocyanatosilan zu dem silylierten Polyurethan erfolgt in der gleichen Weise wie oben für die direkte Umsetzung des Polyols B beschrieben.

Eine erfindungsgemäße Kleb- und Dichtstoff-Zubereitung kann neben den vorgenannten silylierten Polyurethanverbindungen noch weitere Hilfs- und Zusatzstoffe enthalten, die dieser Zubereitung verbesserte elastische Eigenschaften, verbesserte Rückstellfähigkeit, ausreichend lange Verarbeitungszeit, schnelle Durchhärtungsgeschwindigkeit und geringe Restklebrigkeit verleihen. Zu diesen Hilfs- und Zusatzstoffen gehören beispielsweise Weichmacher, Stabilisatoren, Antioxidantien, Füllstoffe, Reaktivverdünner, Trockenmittel, Haftvermittler und UV-Stabilisatoren, rheologische Hilfsmittel, Farbpigmente oder Farbpasten und/oder gegebenenfalls auch im geringen Umfang Lösungsmittel.

Als Weichmacher geeignet sind beispielsweise Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester von Adipinsäuremonooctylester mit 2-Ethylhexanol (Edenol DOA, Fa. Cognis Deutschland GmbH, Düsseldorf) oder auch Ester der Abietinsäure.

Beispielsweise eignen sich von den Phthalsäureestern Dioctylphthalat (DOP), Dibutylphthalat, Diisoundecylphthalat (DIUP) oder Butylbenzylphthalat (BBP) oder deren abgeleitete hydrierte Derivate, von den Adipaten Dioctyladipat (DOA), Diisodecyladipat, Diisodecylsuccinat, Dibutylsebacat oder Butyloleat. Ebenfalls als Weichmacher geeignet sind die reinen oder gemischten Ether monofunktioneller, linearer oder verzweigter C₄₋₁₀Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf).

Ferner eignen sich als Weichmacher endgruppenverschlossene Polyethylenglykole, beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon. Insbesondere mit Dimethyldiethylenglykol wird eine auch unter ungünstigeren Auftragungsbedingungen (geringe Luftfeuchtigkeit, niedrige Temperatur) eine akzeptable Aushärtung erreicht. Für weitere Einzelheiten zu Weichmachern wird auf die einschlägige Literatur der Technischen Chemie verwiesen. Weichmacher können in den Zubereitungen zwischen 0 und 40, vorzugsweise zwischen 0 und 20 Gew.% (bezogen auf die Gesamtzusammensetzung) in der Zubereitung mit verwendet werden.

Unter "Stabilisatoren" im Sinne dieser Erfindung sind Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole wie z.B. Tinuvin 327 (Fa. Ciba Specialty Chemicals) und/oder Amine vom "HALS"-Typ (Hindered Amine Light Stabilizer), wie z.B. Tinuvin 770 (Fa. Ciba Specialty Chemicals). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden. Die erfindungsgemäße Zubereitung kann bis zu etwa 2 Gew.-%, vorzugsweise etwa 1 Gew.-% an Stabilisatoren enthalten. Ferner kann die erfindungsgemäße Zubereitung weiterhin bis zu etwa 7 Gew.-%, insbesondere bis zu etwa 5 Gew.-% Antioxidantien enthalten.

Als Katalysatoren können alle bekannten Verbindungen eingesetzt werden, die die hydrolytische Spaltung der hydrolysierbaren Gruppen der Silangruppierungen sowie die anschließende Kondensation der Si-OH-Gruppe zu Siloxangruppierungen (Vernetzungsreaktion bzw. Haftvermittlungsfunktion) katalysieren können. Beispiele hierfür sind Titanate wie Tetrabutyltitanat und Tetrapropyltitanat, Zinncarboxylate wie Dibutylzinndilaurat (DBTL), Dibutylzinndiacetat, Dibutylzinndiethylhexanoat, Dibutylzinndioctoat, Dibutylzinndimethylmaleat, Dibutylzinndiethylmaleat, Dibutylzinndibutylmaleat, Dibutylzinndiiosooctylmaleat, Dibutylzinnditridecylmaleat, Dibutylzinndibenzylmaleat, Dibutylzinnmaleat, Dibutylzinndiacetat, Zinnoctaoat, Dioctylzinndistealeat, Dioctylzinndilaulat, Dioctylzinndiethylmaleat, Dioctylzinndiisooctylmaleat, Dioctylzinndiacetat, und Zinnnaphthenoat; Zinnalkoxide wie Dibutylzinndimethoxid, Dibutylzinndiphenoxid, und Dibutylzinndiisoproxid; Zinnoxide wie Dibutylzinnoxid, und Dioctylzinnoxid; Reaktionsprodukte zwischen Dibutylzinnoxiden und Phthalsäureestern, Dibutylzinnbisacetylacetonat; Organoaluminumverbindungen wie Aluminumtrisacetylacetonat, Aluminumtrisethylacetoacetat, und Diisopropoxyaluminum-ethylacetoacetat; Chelatverbindungen wie Zirconumtetraacetylacetonat, und Titantetraacetylacetonat; Bleioctanoat; Aminverbindungen oder ihre Salze mit Carbonsäuren, wie Butylamin, Octylamin, Laurylamin, Dibutylamine, Monoethanolamine, Diethanolamine, Triethanolamin, Diethylentriamin, Triethylentetramin, Oleylamine, Cyclohexylamin, Benzylamin, Diethylaminopropylamin, Xylylendiamin, Triethylendiamin, Guanidin, Diphenylguanidin, 2,4,6-tris(dimethylaminomethyl)phenol, Morpholin, N-methylmorpholin, 2-Ethyl-4-methylimidazole, und 1,8-Diazabicyclo-(5,4,0)-undecen-7 (DBU), ein niedermolekulares Polyamid-Harz erhalten aus einem Überschuß eines Polyamins und einer Polybasischen Säure, Addukte aus einem Polyamin im Überschuss mit einem Epoxid, Silanhaftvermittler mit Aminogruppen, wie 3-Aminopropyltrimethoxysilan, und N-(β-aminoethyl)aminopropylmethyldimethoxysilan. Der Katalysator, bevorzugt Mischungen mehrerer Katalysatoren, werden in einer Menge von 0,01 bis etwa 5 Gew.-% bezogen auf das Gesamtgewicht der Zubereitung eingesetzt.

Eine erfindungsgemäße Zubereitung kann zusätzlich Füllstoffe enthalten. Hier eignen sich beispielsweise Kreide, Kalkmehl, gefällte und/oder pyrogene Kieselsäure, Zeolithe, Bentonite, Magnesiumcarbonat, Kieselgur, Tonerde, Ton, Talkum, Titanoxid, Eisenoxid, Zinkoxid, Sand, Quarz, Cristoballit, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Baumwolle, Hackschnitzel, Häcksel, Spreu, gemahlene Walnussschalen und andere Faserkurzschnitte. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet.

Die pyrogenen und/oder gefällten Kieselsäuren weisen vorteilhaft eine BET-Oberfläche von 10 bis 90 m²/g auf. Bei Ihrer Verwendung bewirken sie keine zusätzliche Erhöhung der Viskosität der erfindungsgemäßen Zubereitung, tragen aber zu einer Verstärkung der gehärteten Zubereitung bei.

Es ist ebenso denkbar, pyrogene und/oder gefällte Kieselsäuren mit einer höheren BET-Oberfläche, vorteilhafterweise mit 100 - 250 m²/g, insbesondere 110 - 170 m²/g, als Füllstoff einzusetzen. Aufgrund der höheren BET-Oberfläche kann man den gleichen Effekt, z.B. Verstärkung der gehärteten Zubereitung, bei einem geringeren Gewichtsanteil Kieselsäure erzielen. Somit kann man weitere Stoffe einsetzen, um die erfindungsgemäße Zubereitung hinsichtlich anderer Anforderungen zu verbessern.

Ferner eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis sind z.B. unter den Handelsbezeichnungen Expancel® oder Dualite® erhältlich. Diese sind aus anorganischen oder organischen Stoffen zusammengesetzt, jede mit einem Durchmesser von 1 mm oder weniger, bevorzugt von 500 µm oder weniger.

Für manche Anwendungen sind Füllstoffe bevorzugt, die den Zubereitungen Thixotropie verleihen. Solche Füllstoffe werden auch als rheologische Hilfsmittel beschrieben, z. B. hydriertes Rizinusöl, Fettsäureamide oder quellbare Kunststoffe wie PVC. Um gut aus einer geeigneten Dosiervorrichtung (z. B. Tube) auspressbar zu sein, besitzen solche Zubereitungen eine Viskosität von 30.000 bis 150.000, vorzugsweise 40.000 bis 80.000 mPas oder auch 50.000 bis 60.000 mPas.

Die Füllstoffe werden vorzugsweise in einer Menge von 1 bis 80 Gew.-%, vorzugsweise von 5 bis 60 Gew.%, bezogen auf das Gesamtgewicht der Zubereitung eingesetzt.

Beispiele für geeignete Pigmente sind Titandioxid, Eisenoxide oder Ruß.

Häufig ist es sinnvoll, die erfindungsgemäßen Zubereitungen durch Trockenmittel weiter gegenüber eindringender Feuchtigkeit zu stabilisieren, um die Lagerbarkeit (shelf-life) noch weiter zu erhöhen. Es besteht gelegentlich auch Bedarf, die Viskosität des erfindungsgemäßen Kleb- oder Dichtstoffs für bestimmte Anwendungen durch Verwendung eines Reaktivverdünners zu erniedrigen. Als Reaktivverdünner kann man alle Verbindungen, die mit dem Kleb- oder Dichtstoff unter Verringerung der Viskosität mischbar sind und über mindestens eine mit dem Bindemittel reaktive Gruppe verfügen, einsetzen.

Als Reaktivverdünner kann man z.B. folgende Stoffe einsetzen: mit Isocyanatosilanen umgesetzte Polyalkylenglykole (z.B. Synalox 100-50B, DOW), Carbamatopropyltrimethoxysilan, Alkyltrimethoxysilan, Alkyltriethoxysilan, Methyltrimethoxysilan, Methyltriethoxysilan sowie Vinyltrimethoxysilan (Dynasylan VTMO, Fa. Evonik oder Geniosil XL 10, Fa. Wacker), Vinyltriethoxysilan, Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy(methyl)silylmethyl-O-methyl-carbamat (XL65, Wacker), Hexadecyltrimethoxysilan, 3-Octanoylthio-1-propylthethoxysilan, Aminosilane wie z.B. 3-Aminopropyltrimethoxysilan (Dynasylan AMMO, Fa. Evonik oder Geniosil GF96, Fa. Wacker) und Teilhydrolysate der vorgenannten Verbindungen.

Ferner sind ebenfalls folgende Polymere von Kaneka Corp. als Reaktivverdünner einsetzbar: MS S203H, MS S303H, MS SAT 010, und MS SAX 350.

Ebenso kann man silanmodifizierte Polyether verwenden, die sich z.B. aus der Umsetzung von Isocyanatosilan mit Synalox Typen ableiten.

Eine Vielzahl der vorgenannten silanfunktionellen Reaktivverdünner haben gleichzeitig eine trocknende und / oder haftvermittelnde Wirkung in der Zubereitung. Diese Reaktivverdünner werden in Mengen zwischen 0,1 und 15 Gew.-%, vorzugsweise zwischen 1 und 5 Gew.-%, bezogen auf das Gesamtgewicht der Zubereitung, eingesetzt.

Als Haftvermittler eignen sich aber auch so genannte Klebrigmacher wie Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydridenthaltende Copolymere. Auch der Zusatz von Polyepoxidharzen in geringen Mengen kann bei manchen Substraten die Haftung verbessern. Hierfür werden dann vorzugsweise die festen Epoxidharze mit einem Molekulargewicht von über 700 in fein gemahlener Form eingesetzt. Falls Klebrigmacher als Haftvermittler eingesetzt werden, hängt deren Art und Menge von der Kleb- / Dichtstoffzusammensetzung ab sowie von dem Substrat, auf welches dieser appliziert wird. Typische klebrigmachende Harze (Tackifier) wie z.B. Terpenphenolharze oder Harzsäurederivate werden in Konzentrationen zwischen 5 und 20 Gew.% verwendet, typische Haftvermittler wie Polyamine, Polyaminoamide oder Phenolharze oder Resorcinderivate werden im Bereich zwischen 0,1 und 10 Gew.%, bezogen auf die Gesamtzusammensetzung der Zubereitung verwendet.

Die Herstellung der erfindungsgemäßen Zubereitung erfolgt nach bekannten Verfahren durch inniges Vermischen der Bestandteile in geeigneten Dispergieraggregaten, z. B. Schnellmischer, Kneter, Planetenmischer, Planetendissolver, Innenmischer, so genannte "Banburymischer", Doppelschneckenextruder und ähnliche dem Fachmann bekannte Mischaggregate.

Eine bevorzugte Ausführungsform der erfindungsgemäßen Zubereitung kann enthalten:
- 5 bis 50 Gew.-%, bevorzugt 10 bis 40 Gew.-% eines oder mehrerer der erfindungsgemäßen silylierten Polyurethane,
- 0 bis 30 Gew.-%, weniger als 20 Gew.-%, besonders bevorzugt weniger als 10 Gew.-% Weichmacher,
- 0 bis 80 Gew.-%, bevorzugt 20 bis 60 Gew.-%, besonders bevorzugt 30 bis 55 Gew.-% Füllstoffe Ferner kann die Ausführungsform weitere Hilfsstoffe enthalten.
Die Gesamtheit aller Bestandteile summiert sich zu 100 Gew.-%, wobei sich die Summe der oben aufgeführten Hauptbestandteile allein nicht zu 100 Gew.-% addieren muss.

Die erfindungsgemäßen silylierten Polyurethan-Prepolymere härten mit der umgebenden Luftfeuchtigkeit zu niedermoduligen Polymeren aus, so dass aus diesen Prepolymeren mit den vorgenannten Hilfs- und Zusatzstoffen niedermodulige, feuchtigkeitshärtende Kleb- und Dichtstoffzubereitungen herstellbar sind. Kleb-, Dicht- und Beschichtungsstoffe auf der Basis eines erfindungsgemäßen Verfahrens und/oder eines erfindungsgemäßen Polyethers zeichnen sich dementsprechend durch eine hervorragende Dehnbarkeit und Elastizität aus und lassen sich darüber hinaus aus relativ kurzkettigen, gut verfügbaren und leicht handhabbaren Bestandteilen zusammenfügen.

In dem nachfolgenden Ausführungsbeispiel soll die Erfindung näher erläutert werden, wobei die Auswahl des Beispiels keine Beschränkung des Umfangs des Erfindungsgegenstandes darstellen soll.

### Beispiele

### Beispiel 1 (Polymersynthese)

Die gesamte Reaktion fand unter Stickstoff und unter Ausschluss von Feuchtigkeit statt. Polypropylenglykol 8000 (PPG) wurde zunächst 7h im Vakuum (0,9 mbar) bei 50°C getrocknet. 3,59 g Kalium tert-butoxid (97 % entsprechend 3,48 g aktive Substanz = 30,9 mmol) wurde in einem Kolben vorgelegt und mit Eis auf 0°C abgekühlt. Es wurde 128 g des getrockneten PPG (OH-Zahl = 14, M = 8000 g/mol entsprechend 15,9 mmol) hinzugegeben und 1 h bei 0 °C mit einem KPG-Rührer gerührt, danach 3 h bei RT. 2,21 g 1,3-Bis(brommethyl)-benzol (95% entsprechend 2,10 g aktive Substanz = 8 mmol) wurde zugegeben und das Gemisch für weitere 24 h bei RT unter Stickstoffzufuhr gerührt.

Danach wurde die Stickstoffzufuhr beendet und Bleicherde zugegeben (TriSyl 300). Die Bleicherde wurde abfiltriert, der Vorgang gegebenenfalls wiederholt (um Trübung so gut wie möglich zu entfemen).
Man erhielt eine farblose bis leicht gelbe, klare, sehr viskose Flüssigkeit (OH-Zahl 10 entsprechend M= 12000 g/mol).

Die Probe des so hergestellten Polypropylenglykols wurde mit dem Isocyanatosilan GF 40 (Fa. Wacker) im stöchiometrischen Überschuss umgesetzt und ein Film gezogen, der bei der Umgebungsfeuchtigkeit ausgehärtet wurde.

### Prüfbedingungen für die ausgehärteten Polymerfilme

Von der Mischung wurden Hautbildungszeit (Skin over time / SOT) und die Zeit zur Ausbildung einer klebfreien Schicht (Tack free time / TFT) ermittelt.

Weiterhin wurden die oben genannten Mischungen mit einer Schichtstärke von 2 mm auf mit Polyetherfolie bespannte Glasplatten aufgetragen. Aus diesen Filmen wurden nach 7 Tagen Lagerung (23°C, 50% relative Luftfeuchtigkeit) Probenkörper (S2-Prüfkörper) ausgestanzt und die mechanischen Daten (Module bei 50, 100 und 200% Dehnung und Bruchdehnung, in Anlehnung an DIN EN 27389 und DIN EN 28339 bestimmt:

| | |
|---|---|
| SOT: | 12 min |
| TFT: | 24 h |
| Bruchkraft: | 0,56 N/mm² |
| Dehnung: | 90% |
| E-50: | 0,44 N/mm² |
| E-100: | 0,66 N/mm² |

### Herstellung von härtbaren Zubereitungen:

25 Gewichtsteile der in Beispiel 1 hergestellten Polymermischung wurden anschließend in einem Rührkessel mit 20 Gewichtsteilen Diisoundecylphtalat (DIUP) mittels eines Speedmixers 30 s innig vermengt. Anschließend erfolgte die Zugabe von Füllstoffen und weiteren Zusatzstoffen gemäß der nachfolgenden Vorschrift zum Vergleichsbeispiel 2 (Mengenangaben siehe Beispiel 3 in nachfolgender Tabelle, alle Mengenangaben sind Gewichtsteile). In gleicher Weise wurde zum Vergleich eine härtbare Zubereitung aus einem Polymer gemäß der Lehre der WO2005/042610 hergestellt (Beispiel 2 in der Tabelle).

### Beispiel 2 (Vergleichsbeispiel, gem. WO2005/042610):

282 g (15 mmol) Polypropylenglykol 18000 (OHZ = 6.0) wurden in einem 500 ml
Dreihalskolben bei 100 °C im Vakuum getrocknet. Unter Stickstoffatmosphäre wurden bei 80 °C 0,06 g
(0,02 %) Dibutylzinndilaurat zugegeben und anschließend mit 7,2 g
(32 mmol) Isocyanatopropyltrimethoxysilan (% NCO = 18,4) versetzt. Nach einstündigem Rühren bei 80 °C wurde das entstandene Polymere abgekühlt und mit 6 g
Vinyltrimethoxysilan versetzt. Das klare, farblose Produkt wies einen Isocyanatgehalt von 0,01 % (theoretisch: % NCO = 0,03) auf. Das Produkt wurde feuchtigkeitsdicht unter Stickstoffatmosphäre in einem Glasgefäß gelagert.

Von diesen Zubereitungen wurden Hautbildungszeit (Skin over time / SOT) und die Zeit zur Ausbildung einer klebfreien Schicht (Tack free time / TFT) ermittelt.

Weiterhin wurden die Zubereitungen mit einer Schichtstärke von 2 mm auf mit Polyetherfolie bespannte Glasplatten aufgetragen. Aus diesen Filmen wurden nach 7 Tagen Lagerung (23°C, 50% relative Luftfeuchtigkeit) Probenkörper (S2-Prüfkörper) ausgestanzt und die mechanischen Daten (Module, Dehnung, Rückstellvermögen) in Anlehnung an DIN EN 27389 und DIN EN 28339 bestimmt.

Wie aus den Prüfergebnissen in der nachfolgenden Tabelle ersichtlich wird, weist die erfindungsgemäße Zubereitung (Beispiel 3) sehr ähnliche Hautbildungszeiten, Durchhärtungszeiten, Bruchdehnung und Rückstelllung auf wie die Zubereitung des Vergleichsbeispiels (Beispiel 2). Vorteilhaft sind jedoch die deutlich niedrigere Bruchkraft sowie die niedrigeren E-Moduli, da hierdurch im Anwendungsfall eines Dichtstoffes die Fugenflanken weniger belastet werden als bei Zubereitungen mit höherem E-Modul.

| **Beispiel** | **2 (Vergleich)** | **3 (erfindungsgemäß)** |
|---|---|---|
| Polymer (Vergleich) | 25,00 | - |
| Polymer nach Beispiel 1 | - | 25,00 |
| Weichmacher (DIUP) | 20,00 | 20,00 |
| Calcium Carbonate | 45,05 | 45,05 |
| Kronos 2056 | 3,35 | 3,35 |
| Tinuvin 327 | 0,30 | 0,30 |
| Tinuvin 770 DF | 0,30 | 0,30 |
| Geniosil XL10 | 1,50 | 1,50 |
| Geniosil GF96 | 0,95 | 0,95 |
| DBTL | 0,05 | 0,05 |
| Ergebnisse nach 7 Tagen Aushärtung bei 23°C / 50% rel. Luftfeuchtigkeit | | |
| SOT in min | 25 | 30 |
| TFT in h | 7,00 | 24,00 |
| Bruch in N/mm² | 1,03 | 0,78 |
| Dehnung in % | 188% | 163% |
| E- 50 N/mm² | 0,50 | 0,36 |
| E- 100 N/mm² | 0,68 | 0,53 |
| E- 200 N/mm³ | 1,11 | 0,90 |
| Durchhärtung in mm/24 Std. bei 23°C / 50% rel. Luftfeuchtigkeit | 1,95 | 1,70 |
| Rückstellung in % (nach 100% Dehnung für 24h) | 90% | 90% |
| Restklebrigkeit | keine | keine |

## Patentansprüche

1. Verfahren zur Herstellung eines silylierten Polyurethans, umfassend:
(A) Umsetzen
(i) mindestens einer Polyolverbindung A mit einem Molekulargewicht von 500-20 000 Dalton, insbesondere 4 000-10 000 Dalton, mit einer Ungesättigtheit von weniger als 0,02 meq/g
(ii) mit einem Dihalogenid zu einer Polyolverbindung B mit einem mittleren Molekulargewicht von 4 000-40 000 Dalton, insbesondere 8 000-20 000 Dalton wobei als Polyolverbindung A Polyalkylenglycol(e) eingesetzt werden, und nachfolgende
(B) Umsetzung dieses Polyols B mit einem oder mehreren Isocyanatosilanen der Formel (I):
OCN-R-Si-(R¹)ₘ(-OR²)₃₋ₘ (I)
worin m 0, 1 oder 2 ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist.

2. Verfahren zur Herstellung eines silylierten Polyurethans, umfassend:
(A) Umsetzen
(i) mindestens einer Polyolverbindung A mit einem Molekulargewicht von 500-20 000 Dalton, insbesondere 4 000-10 000 Dalton, und einer terminalen Ungesättigtheit von weniger als 0,02 meq/g
(ii) mit einem Dihalogenid zu einer Polyolverbindung B mit einem Molekulargewicht von 4 000-40 000 Dalton, insbesondere 8 000-20 000 Dalton wobei als Polyolverbindung A Polyalkylenglycol(e) eingesetzt werden, und nachfolgende
(B) Umsetzung dieses Polyols B mit einem Diisocyanat im stöchiometrischen Überschuss des Polyols zu einem Polyurethan-Prepolymer C und nachfolgende
(C) Umsetzung dieses Prepolymers C mit einem oder mehreren Isocyanatosilan(en) der Formel (I):
OCN-R-Si-(R¹)ₘ(-OR²)₃₋ₘ (I)
worin m 0, 1 oder 2 ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist.

3. Verfahren nach Anspruch 2, **dadurch gekennzeichnet, dass** in der Umsetzung (B) zusätzlich mindestens eine gegenüber Isocyanaten monofunktionelle Verbindung ausgewählt aus Monoalkoholen, Monomercaptanen, Monoaminen oder deren Mischungen eingesetzt wird und der Anteil der monofunktionellen Verbindung 1 bis 40 Mol%, vorzugsweise 1 bis 20 Mol%, an der Mischung aus Polyol und der monofunktionellen Verbindung beträgt.

4. Verfahren nach mindestens einem der Ansprüche 1 bis 3, **dadurch gekennzeichnet, dass** als Dihalogenid 1,3-Bis(brommethyl)-benzol verwendet wird.

5. Verfahren nach mindestens einem der Ansprüche 1 bis 4, wobei R eine difunktionelle geradkettige oder verzweigte Alkylengruppe mit 2 bis 6 Kohlenstoffatomen ist.

6. Verfahren nach mindestens einem der Ansprüche 1 bis 5, wobei m null oder eins ist.

7. Verfahren nach mindestens einem der Ansprüche 1 bis 6, wobei das Isocyanatosilan der Formel (I) 3-Isocyanatopropyl-trimethoxysilan oder 3-Isocyanatopropyl-triethoxysilan ist.

8. Silyliertes Polyurethan, hergestellt durch ein Verfahren umfassend:
(A) Umsetzen
(i) mindestens einer Polyolverbindung A mit einem Molekulargewicht von 500-20 000 Dalton, insbesondere 4 000-10 000 Dalton, mit einer terminalen Ungesättigtheit von weniger als 0,02 meq/g
(ii) mit einem Dihalogenid zu einer Polyolverbindung B mit einem mittleren Molekulargewicht von 4 000-40 000 Dalton, insbesondere 8 000-20 000 Dalton wobei als Polyolverbindung A Polyalkylenglycol(e) eingesetzt werden, und nachfolgende
(B) Umsetzung des Polyols B mit einem oder mehreren Isocyanatosilanen der Formel (I):
OCN-R-Si-(R¹)ₘ(-OR²)₃₋ₘ (I)
worin m 0, 1 oder 2 ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist.

9. Silyliertes Polyurethan, hergestellt durch ein Verfahren umfassend:
(A) Umsetzen
(i) mindestens einer Polyolverbindung A mit einem Molekulargewicht von 500-2 0000 Dalton, insbesondere 4 000-10 000 Dalton, und einer terminalen Ungesättigtheit von weniger als 0,02 meq/g
(ii) mit einem Dihalogenid zu einer Polyolverbindung B mit einem Molekulargewicht von 4 000-40 000 Dalton, insbesondere 8 000-20 000 Dalton wobei als Polyolverbindung A Polyalkylenglycol(e) eingesetzt werden, und nachfolgende
(B) Umsetzung dieses Polyols B mit einem Diisocyanat im stöchiometrischen Überschuss des Polyols zu einem Polyurethan-Prepolymer C und nachfolgende
(C) Umsetzung dieses Prepolymers C mit einem oder mehreren Isocyanatosilan(en) der Formel (I):
OCN-R-Si-(R¹)ₘ(-OR²)₃₋ₘ (I)
worin m 0, 1 oder 2 ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist.

10. Silyliertes Polyurethan nach Anspruch 9, **dadurch gekennzeichnet, dass** in der Umsetzung (B) zusätzlich mindestens eine gegenüber Isocyanaten monofunktionelle Verbindung ausgewählt aus Monoalkoholen, Monomercaptanen, Monoaminen oder deren Mischungen eingesetzt wird und der Anteil der monofunktionellen Verbindung 1 bis 40 Mol%, vorzugsweise 1 bis 20 Mol%, an der Mischung aus Polyol und der monofunktionellen Verbindung beträgt.

11. Silyliertes Polyurethan nach mindestens einem der Ansprüche 8 bis 10, **dadurch gekennzeichnet, dass** als Dihalogenid 1,3-Bis(brommethyl)-benzol verwendet wird.

12. Silyliertes Polyurethan nach mindestens einem der Ansprüche 8 bis 11, wobei m null oder eins ist.

13. Silyliertes Polyurethan nach mindestens einem der Ansprüche 8 bis 12, wobei das Isocyanatosilan der Formel (I) 3-Isocyanatopropyl-trimethoxysilan oder 3-Isocyanatopropyl-triethoxysilan ist.

14. Silyliertes Polyurethan nach mindestens einem der Ansprüche 9 bis 13, wobei die Diisocyanatverbindung gewählt ist aus der Gruppe bestehend aus 2,4-Toluol-diisocyanat, 2,6-Toluol-diisocyanat, 4,4'-Diphenyl-methandiisocyanat, 2,4'-Diphenyl-methandiisocyanat, 1-Isocyanato-3,3,5-trimethyl-5-isocyanatomethylcyclohexan (isophorondiisocyanat, IPDI), 4,4'-Dicyclohexylmethan-diisocyanat-Isomeren, Tetramethylxylylendiisocyanat (TMXDI), und Mischungen davon.

15. Verwendung einer Zubereitung enthaltend ein oder mehrere silylierte(s) Polyurethan(e) nach mindestens einem der Ansprüche 8 bis 14 oder hergestellt nach einem Verfahren nach mindestens einem der Ansprüche 1 bis 7 als Klebstoff, Dichtstoff oder Beschichtungsmittel.

## Claims

1. A method for preparing a silylated polyurethane, comprising:
A) reacting
(i) at least one polyol compound A with a molecular weight of 500-20,000 daltons, in particular 4,000-10,000 daltons, with an unsaturation of less than 0.02 meq/g
(ii) with a dihalide to obtain a polyol compound B with an average molecular weight of 4,000-40,000 daltons, in particular 8,000-20,000 daltons, wherein polyalkylene glycol(s) are applied as a polyol compound A, and subsequently
B) reacting this polyol B with one or more isocyanatosilanes of formula (I)
OCN-R-Si-(R¹)ₘ(-OR²)₃₋ₘ (I)
wherein m is 0, 1 or 2, each R² is an alkyl radical with 1 to 4 carbon atoms, each R¹ is an alkyl radical with 1 to 4 carbon atoms and R is a difunctional organic group.

2. A method for preparing a silylated polyurethane, comprising:
A) reacting
(i) at least one polyol compound A with a molecular weight of 500-20,000 daltons, in particular 4,000-10,000 daltons, with a terminal unsaturation of less than 0.02 meq/g
(ii) with a dihalide to obtain a polyol compound B with a molecular weight of 4,000-40,000 daltons, in particular 8,000-20,000 daltons, wherein polyalkylene glycol(s) are applied as a polyol compound A, and subsequently
B) reacting this polyol B with a di-isocyanate in stoichiometric excess of the polyol to obtain a polyurethane prepolymer C and subsequently
C) reacting this prepolymer C with one or more isocyanatosilanes of formula (I)
OCN-R-Si-(R¹)ₘ(-OR²)₃₋ₘ (I)
wherein m is 0, 1 or 2, each R² is an alkyl radical with 1 to 4 carbone atoms, each R¹ is an alkyl radical with 1 to 4 carbon atoms and R is a difunctional organic group.

3. The method according to claim 2, **characterized in that** additionally at least one compound, monofunctional toward isocyanates, selected from mono-alcohols, monomercaptans, monoamines or mixtures thereof, is applied in reaction (B) and the proportion of the monofunctional compound is from 1 to 40% by moles, preferably from 1 to 20% by moles based on the mixture of polyol and of the monofunctional compound.

4. The method according to at least one of claims 1 to 3, **characterized in that** 1,3-bis(bromomethyl)-benzene is used as a dihalide.

5. The method according to at least one of claims 1 to 4, wherein R is a difunctional, linear or branched alkylene group with 2 to 6 carbon atoms.

6. The method according to at least one of claims 1 to 5, wherein m is zero or one.

7. The method according to at least one of claims 1 to 6, wherein the isocyanatosilane of formula (I) is 3-isocyanatopropyl-trimethoxysilane or 3-isocyanatopropyl-triethoxysilane.

8. A silylated polyurethane, prepared by a method comprising:
A) reacting
(i) at least one polyol compound A with a molecular weight of 500-20,000 daltons, in particular 4,000-10,000 daltons, with a terminal unsaturation of less than 0.02 meq/g
(ii) with a dihalide to obtain a polyol compound B with an average molecular weight of 4,000-40,000 daltons, in particular 8,000-20,000 daltons, wherein polyalkylene glycol(s) are applied as a polyol compound A, and subsequently
B) reacting this polyol B with one or more isocyanatosilanes of formula (I)
OCN-R-Si-(R¹)ₘ(-OR²)₃₋ₘ (I)
wherein m is 0, 1 or 2, each R² is an alkyl radical with 1 to 4 carbon atoms, each R¹ is an alkyl radical with 1 to 4 carbon atoms and R is a difunctional organic group.

9. A silylated polyurethane, prepared by a method comprising:
A) reacting
(i) at least one polyol compound A with a molecular weight of 500-20,000 daltons, in particular 4,000-10,000 daltons, and with a terminal unsaturation of less than 0.02 meq/g
(ii) with a dihalide to obtain a polyol compound B with a molecular weight of 4,000-40,000 daltons, in particular 8,000-20,000 daltons, wherein polyalkylene glycol(s) are applied as a polyol compound A, and subsequently
B) reacting this polyol B with a di-isocyanate in stoichiometric excess of the polyol to obtain a polyurethane prepolymer C and subsequently
C) reacting this prepolymer C with one or more isocyanatosilanes of formula (I)
OCN-R-Si-(R¹)ₘ(-OR²)₃₋ₘ (I)
wherein m is 0, 1 or 2, each R² is an alkyl radical with 1 to 4 carbon atoms, each R¹ is an alkyl radical with 1 to 4 carbon atoms and R is a difunctional organic group.

10. The silylated polyurethane according to claim 9, **characterized in that** additionally at least one compound, monofunctional toward isocyanates, selected from mono-alcohols, monomercaptans, monoamines or mixtures thereof, is applied in reaction (B) and the proportion of the monofunctional compound is from 1 to 40% by moles, preferably from 1 to 20% by moles based on the mixture of polyol and of the monofunctional compound.

11. The silylated polyurethane according to at least one of claims 8 to 10, characterized in that1,3-bis(bromomethyl)-benzene is used as a dihalide.

12. The silylated polyurethane according to at least one of claims 8 to 11, wherein m is zero or one.

13. The silylated polyurethane according to at least one of claims 8 to 12, wherein the isocyanatosilane of formula (I) is 3-isocyanatopropyl-trimethoxysilane or 3-isocyanatopropyl-triethoxysilane.

14. The silylated polyurethane according to at least one of the claims 9 to 13, wherein the diisocyanate compound is selected from the group consisting of 2,4-toluene-diisocyanate, 2,6-toluene-diisocyanate, 4,4'-diphenyl-methane-diisocyanate, 2,4'-diphenyl-methane-diisocyanate, 1-isocyanato-3,3,5-trimethyl-5-isocyanatomethylcyclohexane (isophorone-diisocyanate, IPDI), 4,4'-dicyclohexylmethane-diisocyanate isomers, tetramethylxylylene-diisocyanate (TMXDI), and mixtures thereof.

15. The use of a preparation containing one or more silylated polyurethane(s) according to at least one of claims 8 to 14 or prepared according to a method according to at least one of claims 1 to 7, as an adhesive, a sealant, or a coating agent.

## Revendications

1. Procédé pour la préparation d'un polyuréthane silylé, comprenant :
(A) la mise en réaction
(i) d'au moins un composé de polyol A possédant un poids moléculaire de 500 à 20 000 Daltons, en particulier de 4000 à 10 000 Daltons, avec une insaturation inférieure à 0,02 méq/g ;
(ii) avec un dihalogénure pour obtenir un composé de polyol B possédant un poids moléculaire moyen de 4000 à 40 000 Daltons, en particulier de 8000 à 20 000 Daltons, un ou plusieurs polyalkylèneglycols étant mis en oeuvre à titre de composé de polyol A, suivie de
(B) la mise en réaction de ce polyol (B) avec un ou plusieurs isocyanatosilanes répondant à la formule (I) :
OCN-R-SI-(R¹)ₘ(-OR²)₃₋ₘ (I)
dans laquelle m est égal à 0, 1 ou 2, chaque résidu R² représente un résidu alkyle contenant de 1 à 4 atomes de carbone, chaque résidu R¹ représente un résidu alkyle contenant de 1 à 4 atomes de carbone et R représente un groupe organique difonctionnel.

2. Procédé pour la préparation d'un polyuréthane silylé, comprenant :
(A) la mise en réaction
(i) d'au moins un composé de polyol A possédant un poids moléculaire de 500 à 20 000 Daltons, en particulier de 4000 à 10 000 Daltons, et une insaturation terminale inférieure à 0,02 méq/g ;
(ii) avec un dihalogénure pour obtenir un composé de polyol B possédant un poids moléculaire de 4000 à 40 000 Daltons, en particulier de 8000 à 20 000 Daltons, un ou plusieurs polyalkylèneglycols étant mis en oeuvre à titre de composé de polyol A, suivie de
(B) la mise en réaction de ce polyol (B) avec un diisocyanate en un excès stoechiométrique du polyol pour obtenir un prépolymère de polyuréthane (C), suivie de
(C) la mise en réaction de ce prépolymère (C) avec un ou plusieurs isocyanatosilanes répondant à la formule (I) :
OCN-R-Si-(R¹)ₘ(-OR²)₃₋ₘ (I)
dans laquelle m est égal à 0, 1 ou 2, chaque résidu R² représente un résidu alkyle contenant de 1 à 4 atomes de carbone, chaque résidu R¹ représente un résidu alkyle contenant de 1 à 4 atomes de carbone et R représente un groupe organique difonctionnel.

3. Procédé selon la revendication 2, **caractérisé en ce qu'**on met en oeuvre, dans la mise en réaction (B) en outre au moins un composé monofonctionnel vis-à-vis d'isocyanates choisi parmi des monoalcools, des monomercaptans, des monoamines ou leurs mélanges et la fraction du composé monofonctionnel s'élève de 1 à 40 moles %, de préférence de 1 à 20 moles %, dans le mélange du polyol et du composé monofonctionnel.

4. Procédé selon au moins une des revendications 1 à 3, **caractérisé en ce qu'**on utilise, à titre de dihalogénure, du 1,3-bis (bromométhyl)-benzène.

5. Procédé selon au moins une des revendications 1 à 4, dans lequel R représente un groupe alkylène difonctionnel à chaîne droite ou ramifiée contenant de 2 à 6 atomes de carbone.

6. Procédé selon au moins une des revendications 1 à 5, dans lequel m est égal à 0 ou 1.

7. Procédé selon au moins une des revendications 1 à 6, dans lequel l'isocyanatosilane répondant à la formule (I) est le 3-isocyanatopropyl-triméthoxysilane ou le 3-isocyanatopropyl-triéthoxysilane.

8. Polyuréthane silylé, que l'on prépare via un procédé comprenant :
(A) la mise en réaction
(i) d'au moins un composé de polyol A possédant un poids moléculaire de 500 à 20 000 Daltons, en particulier de 4000 à 10 000 Daltons, avec une insaturation terminale inférieure à 0,02 méq/g ;
(ii) avec un dihalogénure pour obtenir un composé de polyol B possédant un poids moléculaire moyen de 4000 à 40 000 Daltons, en particulier de 8000 à 20 000 Daltons, un ou plusieurs polyalkylèneglycols étant mis en oeuvre à titre de composé de polyol A, suivie de
(B) la mise en réaction du polyol (B) avec un ou plusieurs isocyanatosilanes répondant à la formule (I) :
OCN-R-SI-(R¹)ₘ(-OR²)₃₋ₘ (I)
dans laquelle m est égal à 0, 1 ou 2, chaque résidu R² représente un résidu alkyle contenant de 1 à 4 atomes de carbone, chaque résidu R¹ représente un résidu alkyle contenant de 1 à 4 atomes de carbone et R représente un groupe organique difonctionnel.

9. Polyuréthane silylé, que l'on prépare via un procédé comprenant :
(A) la mise en réaction
(i) d'au moins un composé de polyol A possédant un poids moléculaire de 500 à 20 000 Daltons, en particulier de 4000 à 10 000 Daltons, et une insaturation terminale inférieure à 0,02 méq/g ;
(ii) avec un dihalogénure pour obtenir un composé de polyol B possédant un poids moléculaire de 4000 à 40 000 Daltons, en particulier de 8000 à 20 000 Daltons, un ou plusieurs polyalkylèneglycols étant mis en oeuvre à titre de composé de polyol A, suivie de
(B) la mise en réaction de ce polyol (B) avec un diisocyanate en un excès stoechiométrique du polyol pour obtenir un prépolymère de polyuréthane (C), suivie de
(C) la mise en réaction de ce prépolymére (C) avec un ou plusieurs isocyanatosilanes répondant à la formule (I) :
OCN-R-Si(R¹)ₘ(-OR²)₃₋ₘ (I)
dans laquelle m est égal à 0, 1 ou 2, chaque résidu R² représente un résidu alkyle contenant de 1 à 4 atomes de carbone, chaque résidu R¹ représente un résidu alkyle contenant de 1 à 4 atomes de carbone et R représente un groupe organique difonctionnel.

10. Polyuréthane silylé selon la revendication 9, **caractérisé en ce qu'**on met en oeuvre, dans la mise en réaction (B) en outre au moins un composé monofonctionnel vis-à-vis d'isocyanates choisi parmi des monoalcools, des monomercaptans, des monoamines ou leurs mélanges et la fraction du composé monofonctionnel s'élève de 1 à 40 moles %, de préférence de 1 à 20 moles %, dans le mélange du polyol et du composé monofonctionnel.

11. Polyuréthane silylé selon au moins une des revendications 8 à 10, **caractérisé en ce qu'**on utilise, à titre de dihalogénure, du 1,3-bis (bromométhyl)-benzène.

12. Polyuréthane silylé selon au moins une des revendications 8 à 11, dans lequel m est égal à 0 ou 1.

13. Polyuréthane silylé selon au moins une des revendications 8 à 12, dans lequel l'isocyanatosilane répondant à la formule (I) est le 3-isocyanatopropyl-triméthoxysilane ou le 3-isocyanatopropyl-triéthoxysilane.

14. Polyuréthane silylé selon au moins une des revendications 9 à 13, dans lequel le composé de diisocyanate est choisi parmi le groupe constitué par le 2,4-toluène-diisocyanate, le 2,6-toluène-diisocyanate, le 4,4'-diphényl-méthanediisocyanate, le 2,4'-diphényl-méthanediisocyanate, le 1-isocyanato- 3,3,5-triméthyl-5-isocyanatométhylcyclohexane (isophoronediisocyanate, IPDI), des isomères du 4,4'-dicydohexylméthane-diisocyanate, le tétraméthylxylylènediisocyanate (TMXDI) et leurs mélanges.

15. Utilisation d'une préparation contenant un ou plusieurs polyuréthane(s) silylé(s) selon au moins une des revendications 8 à 14, ou que l'on prépare conformément à un procédé selon au moins une des revendications 1 à 7, à titre d'adhésif, de substance d'étanchéité ou d'agent d'enduction.
